# EUROPEAN PATENT APPLICATION

(11) **EP 4 734 221 A1**
(43) Date of publication of application: **29.04.2026**
(21) Application number: 25774946.5
(22) Date of filing: 13.03.2025
(51) Int. Cl.: H01M 10/42, B05C 11/10, B05C 5/02

(54) **COATING APPARATUS**

(30) Priority: 19.03.2024 KR 20240037944
(71) Applicant: LG Energy Solution, Ltd., Seoul 07335 (KR)
(72) Inventor: CHOI, Min Hyuck, Daejeon 34122 (KR); KIM, Min Cheol, Daejeon 34122 (KR); PARK, Min Gu, Daejeon 34122 (KR); KIM, Won Hwi, Daejeon 34122 (KR); KIM, Sang Min, Daejeon 34122 (KR); MOON, Young Gyu, Daejeon 34122 (KR)
(74) Representative: Plasseraud IP
(86) International application number: PCT/KR2025/099743
(87) International publication number: WO 2025/198438

(57) **Abstract**

Disclosed herein relates to a coating device including: a coating die including a first internal flow path; a supply tank storing a first coating liquid; a first supply line extending from the supply tank and configured to deliver the first coating liquid; a first flow path diverter valve connected to the first supply line and comprising a first input end into which the first coating liquid flows, a first output end discharging the first coating liquid, and a second output end discharging the first coating liquid; a second supply line extending between the first output end of the first flow path diverter valve and the first internal flow path of the coating die; a return line extending between the second output end of the first flow path diverter valve and the supply tank; and a first flow regulating valve installed in at least one of the second supply line and the first internal flow path of the coating die, and configured to regulate a flow rate of the first coating liquid.

## Description

### [Technical Field]

The present disclosure relates to a coating device.

This application claims the benefit of Korean Patent Application No. 10-2024-0037944, filed on March 19, 2024, the disclosure of which is incorporated herein by reference.

### [Background]

As technology development and demand for mobile devices increases, the demand for secondary batteries as an energy source is rapidly increasing, and these secondary batteries essentially include an electrode assembly as a power generation element. The electrode assembly has a positive electrode, a separator, and a negative electrode laminated at least once, and the positive electrode and the negative electrode are manufactured by applying a coating liquid to a current collector composed of aluminum foil and copper foil, respectively. The coating liquid may include an electrode slurry (positive electrode active material slurry or negative electrode active material slurry) and/or an insulating liquid applied to both sides of the electrode slurry layer to insulate the electrode slurry layer coated with the electrode slurry. In the coating process of applying the coating liquid to the substrate, the discharge pressure and/or flow rate of the coating liquid discharged onto the substrate is required to be maintained within a predetermined target range.

### [Summary]

### [Technical Problem]

The technical problem to be solved by the present disclosure is to provide a coating device.

### [Technical Solution]

To solve the above-mentioned problem, the technical idea of the present disclosure is to provide a coating device including: a coating die including a first internal flow path; a supply tank storing a first coating liquid; a first supply line extending from the supply tank and configured to deliver the first coating liquid; a first flow path diverter valve connected to the first supply line and comprising a first input end into which the first coating liquid flows, a first output end discharging the first coating liquid, and a second output end discharging the first coating liquid; a second supply line extending between the first output end of the first flow path diverter valve and the first internal flow path of the coating die; a return line extending between the second output end of the first flow path diverter valve and the supply tank; and a first flow regulating valve installed in at least one of the second supply line and the first internal flow path of the coating die, and configured to regulate a flow rate of the first coating liquid.

In exemplary embodiments, the coating die further comprises a second internal flow path, and the coating device further includes: a second flow path diverter valve connected to the first supply line and comprising a second input end into which the first coating liquid flows, a third output end discharging the first coating liquid, and a fourth output end discharging the first coating liquid; a third supply line extending between the third output end of the second flow path diverter valve and the second internal flow path of the coating die; and a second flow regulating valve installed in at least one of the third supply line and the second internal flow path of the coating die, and configured to regulate a flow rate of the first coating liquid.

In exemplary embodiments, the fourth output end of the second flow path diverter valve is connected to the supply tank via the return line, and the first coating liquid discharged from the second output end of the first flow path diverter valve and the first coating liquid discharged from the fourth output end of the second flow path diverter valve are merged in the return line and delivered to the supply tank.

In exemplary embodiments, the return line includes a first segment connected to the second output end of the first flow path diverter valve, a second segment connected to the fourth output end of the second flow path diverter valve, and a third segment connected to the supply tank and connected to each of the first segment and the second segment.

In exemplary embodiments, the coating die includes: a die block comprising the first internal flow path, the second internal flow path, and a manifold in which a second coating liquid is accommodated; and a coating shim disposed within the die block and comprising a first flow path in communication with the first internal flow path, a second flow path in communication with the second internal flow path, and a third flow path in communication with the manifold.

In exemplary embodiments, the first coating liquid includes an insulating liquid, and the second coating liquid includes an electrode slurry.

In exemplary embodiments, the die block includes: a first block including the first internal flow path and the second internal flow path; and a second block including the manifold, and the coating shim is interposed between the first block and the second block.

In exemplary embodiments, the first flow regulating valve is mounted in the first internal flow path of the coating die.

In exemplary embodiments, the coating device further includes a pump installed in the first supply line.

In exemplary embodiments, the first flow path diverter valve includes a three-way valve.

To solve the above-mentioned problem, the technical idea of the present disclosure is to provide a coating device including: a coating die including a first internal flow path and a second internal flow path; a supply tank storing a first coating liquid; a first supply line extending from the supply tank and configured to deliver the first coating liquid; a pump installed in the first supply line; a first flow path diverter valve connected to the first supply line and including a first input end into which the first coating liquid flows, a first output end discharging the first coating liquid, and a second output end discharging the first coating liquid; a second supply line extending between the first output end of the first flow path diverter valve and the first internal flow path of the coating die; a second flow path diverter valve connected to the first supply line and including a second input end into which the first coating liquid flows, a third output end discharging the first coating liquid, and a fourth output end discharging the first coating liquid; a third supply line extending between the third output end of the second flow path diverter valve and the second internal flow path of the coating die; and a return line extending from each of the second output end of the first flow path diverter valve and the fourth output end of the second flow path diverter valve to the supply tank, wherein the first coating liquid discharged from the second output end of the first flow path diverter valve and the first coating liquid discharged from the fourth output end of the second flow path diverter valve are merged in the return line and delivered to the supply tank.

In exemplary embodiments, the coating device further includes: a first flow regulating valve installed in the second supply line and configured to regulate a flow rate of the first coating liquid; and a second flow regulating valve installed in the third supply line and configured to regulate a flow rate of the first coating liquid.

In exemplary embodiments, the coating device further includes: a first flow regulating valve installed in the first internal flow path of the coating die and configured to regulate a flow rate of the first coating liquid; and a second flow regulating valve installed in the second internal flow path of the coating die and configured to regulate a flow rate of the first coating liquid.

In exemplary embodiments, the coating die includes: a die block comprising the first internal flow path, the second internal flow path, and a manifold in which a second coating liquid is accommodated; and a coating shim disposed within the die block and comprising a first flow path in communication with the first internal flow path, a second flow path in communication with the second internal flow path, and a third flow path in communication with the manifold.

In exemplary embodiments, the first coating liquid comprises an insulating liquid, and the second coating liquid includes an electrode slurry.

### [Advantageous Effects]

According to exemplary embodiments, by controlling the flow rate of the first coating liquid with first and second flow regulating valves installed in the coating die or in a pipe proximate to the coating die, in conjunction with controlling the operating speed of the pump, the time required to form the discharge pressure and/or flow rate of the first coating liquid to a target range can be reduced, ultimately reducing process losses and increasing productivity.

According to exemplary embodiments, first and second flow path diverter valves that determine the flow direction of the first coating liquid can be utilized to determine whether the first coating liquid provided from the supply tank is to be supplied to the coating die or returned to the supply tank.

In exemplary embodiments, the first and second flow path diverter valves can be controlled to return the first coating liquid to the supply tank when the first coating liquid has not reached the desired discharge pressure and/or flow rate, and to discharge the first coating liquid through the coating die when the first coating liquid has reached the desired discharge pressure and/or flow rate. By preventing the first coating liquid from being discharged onto the substrate when the first coating liquid has not reached the desired discharge pressure and/or flow rate, process losses can be reduced and productivity can be increased.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a schematic diagram illustrating a coating device according to exemplary embodiments.
FIG. 2 is a cross-sectional view illustrating a coating die of a coating device according to exemplary embodiments.
FIGS. 3a to 3c are cross-sectional views illustrating a flow regulating valve according to exemplary embodiments.
FIGS. 4a and 4b are schematic diagrams illustrating a coating method using a coating device according to exemplary embodiments.
FIG. 5 is a schematic diagram illustrating a coating device according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

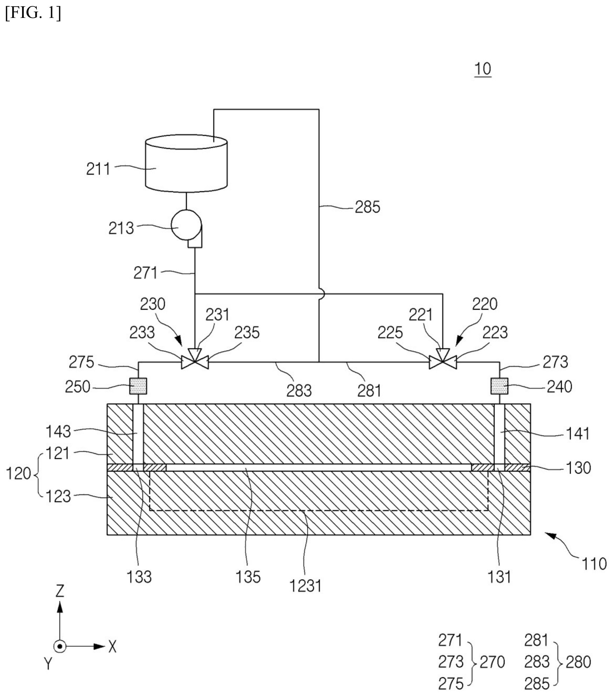

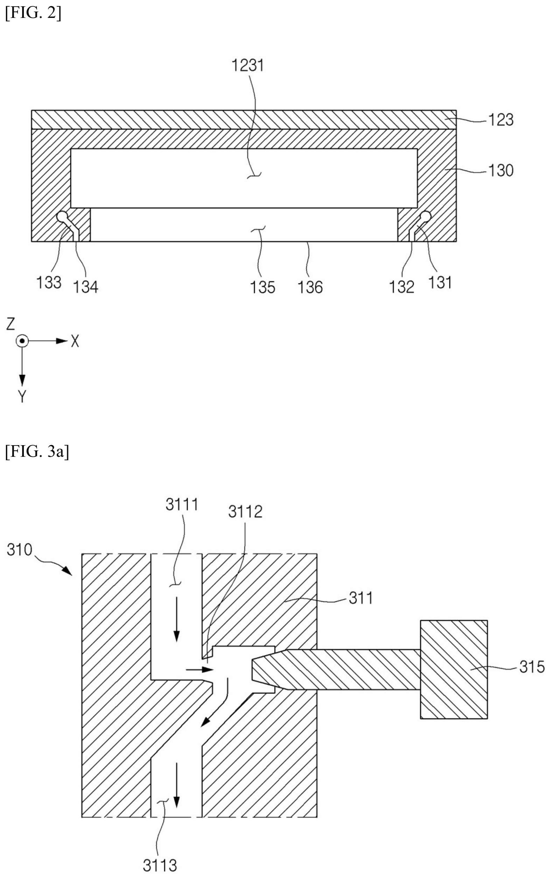

FIG. 1 is a schematic diagram illustrating a coating device 10 according to exemplary embodiments. FIG. 2 is a cross-sectional view illustrating a coating die 110 of a coating device 10 according to exemplary embodiments.

Referring to FIGS. 1 and 2, the coating device 10 can apply a coating liquid to a substrate by discharging a coating liquid toward the substrate being moved by a coating roll. The substrate may be a current collector, and the coating liquid may include an electrode slurry and/or an insulating liquid. The electrode slurry may include a positive electrode active material slurry and a negative electrode active material slurry. In exemplary embodiments, the coating device 10 may be configured to simultaneously apply the electrode slurry and insulating liquid on one surface of the substrate. In exemplary embodiments, the coating device 10 may be configured to apply only one of the electrode slurry and insulating liquid to one surface of the substrate. The insulating liquid may be applied to the substrate to cover both sides of the electrode slurry coated on the substrate. The insulating liquid may be referred to as a first coating liquid, and the electrode slurry may be referred to as a second coating liquid.

The coating device 10 may include a coating die 110, a supply tank 211, a pump 213, a first flow path diverter valve 220, a second flow path diverter valve 230, a first flow regulating valve 240, and a second flow regulating valve 250.

The coating die 110 may be configured to receive the first coating liquid and the second coating liquid, and to discharge the first coating liquid and the second coating liquid toward the substrate. The coating die 110 may include a die block 120 and a coating shim 130. The die block 120 may include a first block 121 and a second block 123. The coating shim 130 may be interposed between the first block 121 and the second block 123. The coating shim 130 may be fastened to at least one of the first block 121 and the second block 123 by a fastening member, such as a bolt.

The first block 121 may include a first internal flow path 141 and a second internal flow path 143. The first internal flow path 141 and the second internal flow path 143 may each convey a first coating liquid provided from the outside of the coating die 110 toward the coating shim 130. The second block 123 may include a manifold 1231 that accommodates the externally provided second coating liquid.

The coating shim 130 may include a first flow path 131, a second flow path 133, and a third flow path 135.

The first flow path 131 of the coating shim 130 may be in communication with a first internal flow path 141, and an end of the first flow path 131 may be provided with a first outlet 132 for discharging a first coating liquid. A portion of the first flow path 131 may be aligned with the first internal flow path 141 of the first block 121 in one direction (e.g., the Z direction). The externally provided first coating liquid may be delivered through the first internal flow path 141 of the first block 121 and the first flow path 131 of the coating shim 130, in turn, to a first outlet 132 of the coating shim 130, and may be discharged through the first outlet 132 toward a substrate on one side of the die lip of the coating die 110.

A second flow path 133 of the coating shim 130 may be in communication with a second internal flow path 143, and an end of the second flow path 133 may be provided with a second outlet 134 for discharging the first coating liquid. A portion of the second flow path 133 may be aligned with the second internal flow path 143 of the first block 121 in one direction (e.g., the Z direction). The externally provided first coating liquid may be delivered through the second internal flow path 143 of the first block 121 and the second flow path 133 of the coating shim 130 in turn to the second outlet 134 of the coating shim 130, and may be discharged through the second outlet 134 toward the substrate on one side of the die lip of the coating die 110.

A third flow path 135 may be in communication with the manifold 1231 of the second block 123, and a third outlet 136 may be provided at an end of the third flow path 135 to discharge a second coating liquid. The first flow path 131 and the second flow path 133 may be spaced apart in the width direction (e.g., X direction) of the third flow path 135 with the third flow path 135 between them. The horizontal width of the third flow path 135 may be defined by the coating shim 130, and the vertical length of the third flow path 135 may be defined by the first block 121 and the second block 123. A portion of the third flow path 135 may be aligned with the manifold 1231. An externally provided second coating liquid may be delivered through the manifold 1231 of the second block 123 and the third flow path 135 of the coating shim 130 in turn to the third outlet 136 of the coating shim 130, and may be discharged through the third outlet 136 toward the substrate on one side of the die lip of the coating die 110.

The supply tank 211 may store and supply the first coating liquid. The supply tank 211 may be connected to the coating die 110 via a supply line 270. The supply line 270 may include a pipe with flow paths to guide the liquid. The first coating liquid provided from the supply tank 211 can be delivered to the first internal flow path 141 and the second internal flow path 143 of the coating die 110 via the supply line 270. The pump 213 may provide power to deliver the first coating liquid to the coating die 110. By adjusting the operating speed (e.g., revolutions per minute (rpm)) of the pump 213, the discharge pressure and/or flow rate of the first coating liquid discharged from the coating die 110 can be adjusted.

The first flow path diverter valve 220 and the second flow path diverter valve 230 may be installed in the supply line 270. The first flow path diverter valve 220 and the second flow path diverter valve 230 may each include a three-way valve. The first flow path diverter valve 220 and the second flow path diverter valve 230 may be configured to be actuated by an electronic signal.

The first flow path diverter valve 220 may include a first input end 221 into which the first coating liquid flows, a first output end 223 through which the first coating liquid is discharged, and a second output end 225 through which the first coating liquid is discharged. The first input end 221, first output end 223, and second output end 225 of the first flow path diverter valve 220 are each switchable between an open state that allows flow of the first coating liquid and a closed state that blocks flow of the first coating liquid. The first flow path diverter valve 220 may discharge the first coating liquid flowed through the first input end 221 to the first output end 223 or the second output end 225.

The second flow path diverter valve 230 may include a second input end 231 into which the first coating liquid flows, a third output end 233 through which the first coating liquid is discharged, and a fourth output end 235 through which the first coating liquid is discharged. The second input end 231, third output end 233, and fourth output end 235 of the second flow path diverter valve 230 are each switchable between an open state that allows flow of the first coating liquid and a closed state that blocks flow of the first coating liquid. The second flow path diverter valve 230 may discharge the first coating liquid flowed through the second input end 231 to the third output end 233 or the fourth output end 235.

The supply line 270 may include a first supply line 271, a second supply line 273, and a third supply line 275.

The first supply line 271 may extend between the supply tank 211 and the first input end 221 of the first flow path diverter valve 220, and between the supply tank 211 and the second input end 231 of the second flow path diverter valve 230. A pump 213 may be installed in the first supply line 271. The first coating liquid provided from the supply tank 211 may be delivered to the first flow path diverter valve 220 and the second flow path diverter valve 230 via the first supply line 271.

The second supply line 273 may extend between the first output end 223 of the first flow path diverter valve 220 and the inlet of the first internal flow path 141 of the coating die 110. The first coating liquid discharged from the first output end 223 of the first flow path diverter valve 220 may be delivered to the first internal flow path 141 of the coating die 110 via the second supply line 273.

A third supply line 275 may extend between the third output end 233 of the second flow path diverter valve 230 and the inlet of the second internal flow path 143 of the coating die 110. The first coating liquid discharged from the third output end 233 of the second flow path diverter valve 230 may be delivered to the second internal flow path 143 of the coating die 110 via the third supply line 275.

A return line 280 may extend from each of the first flow path diverter valve 220 and the second flow path diverter valve 230 to the supply tank 211. The return line 280 may include pipes with flow paths to guide the liquid. The return line 280 may convey the first coating liquid discharged from the second output end 225 of the first flow path diverter valve 220 and the fourth output end 235 of the second flow path diverter valve 230 to the supply tank 211.

The return line 280 may include a first segment 281 connected to the second output end 225 of the first flow path diverter valve 220, a second segment 283 connected to the fourth output end 235 of the second flow path diverter valve 230, and a third segment 285 connected to the supply tank 211 and connected to each of the first segment 281 and the second segment 283. The first coating liquid discharged from the second output end 225 of the first flow path diverter valve 220 and the first coating liquid discharged from the fourth output end 235 of the second flow path diverter valve 230 may merge at the third segment 285, and may be delivered to the supply tank 211 via the third segment 285.

The first flow regulating valve 240 may be installed in at least one of the second supply line 273 and the first internal flow path 141 of the coating die 110. The first flow regulating valve 240 can regulate the flow rate of the first coating liquid discharged from the first flow regulating valve 240, thereby regulating the flow rate of the first coating liquid supplied to the first flow path 131 of the coating shim 130. The second flow regulating valve 250 may be installed in at least one of the third supply line 275 and the second internal flow path 143 of the coating die 110. The second flow regulating valve 250 can regulate the flow rate of the first coating liquid discharged from the second flow regulating valve 250, thereby regulating the flow rate of the first coating liquid supplied to the second flow path 133 of the coating shim 130. The first flow regulating valve 240 and the second flow regulating valve 250 may be configured to be actuated by an electronic signal.

The coating device 10 may further include a controller configured to control an overall coating process using the coating device 10. The controller may be signal transmittably connected to components of the coating device 10, such as the pump 213, the first and second flow path diverter valves 220, 230, the first and second flow regulating valves 240, 250, and the like. The controller may include at least one processor and at least one memory device. The processor may include a central processing unit (CPU), a micro processor unit (MPU), and/or a graphic processing unit (GPU). For example, the memory device may include random access memory (RAM) and/or read only memory (ROM).

According to exemplary embodiments, the first and second flow path diverter valves 220, 230, which determine the flow direction of the first coating liquid, can be utilized to determine whether the first coating liquid provided from the supply tank 211 is to be supplied to the coating die 110 or returned to the supply tank 211.

Further, in exemplary embodiments, the first coating liquid discharged from the first and second flow path diverter valves 220, 230 may be delivered to the supply tank 211 via a single return line 280. If a plurality of flow path diverter valves is each returned to the supply tank 211 via independent pipe, this may increase the complexity of the pipe design and increase manufacturing and maintenance costs due to increased components. However, in exemplary embodiments, the first coating liquid discharged from the first and second flow path diverter valves 220, 230 is returned to the supply tank 211 via a single return line 280, which can reduce manufacturing and maintenance costs.

In general, the operating speed (e.g., rpm) of the pump 213 was adjusted to regulate the discharge pressure and/or flow rate of the first coating liquid. The method of regulating the discharge pressure and/or flow rate of the first coating liquid by the operating speed of the pump 213 had a low responsiveness, thereby requiring a relatively long stabilization time before the first coating liquid could be discharged at the desired discharge pressure and/or flow rate. The longer the stabilization time, the greater the process losses.

According to exemplary embodiments, first and second flow regulating valves 240, 250 installed in the coating die 110 or in a pipe proximate to the coating die 110 can be utilized to rapidly adjust the discharge pressure and/or flow rate of the first coating liquid. For example, when the flow rate of the first coating liquid discharged from the coating die 110 is greater than a target value, the first and second flow regulating valves 240, 250 can reduce the flow rate of the first coating liquid. For example, when the flow rate of the first coating liquid discharged from the coating die 110 is less than the target value, the first and second flow regulating valves 240, 250 can increase the flow rate of the first coating liquid. By controlling the flow rate of the first coating liquid with the first and second flow regulating valves 240, 250 installed in pipe proximate to the coating die 110 and/or directly in the coating die 110, in conjunction with controlling the operating speed of the pump 213, the time required to form the discharge pressure and/or flow rate of the first coating liquid to a target range can be reduced, ultimately reducing process losses and increasing productivity.

FIGS. 3a through 3c are cross-sectional views illustrating a flow regulating valve 310 according to exemplary embodiments.

Referring to FIGS. 3a through 3c, the flow regulating valve 310 may include a valve body 311 having an internal flow path, and a plug 315 inserted into the internal flow path of the valve body 311. The flow regulating valve 310 may correspond to the first and second flow regulating valves 240, 250 shown in FIGS. 1 and 2.

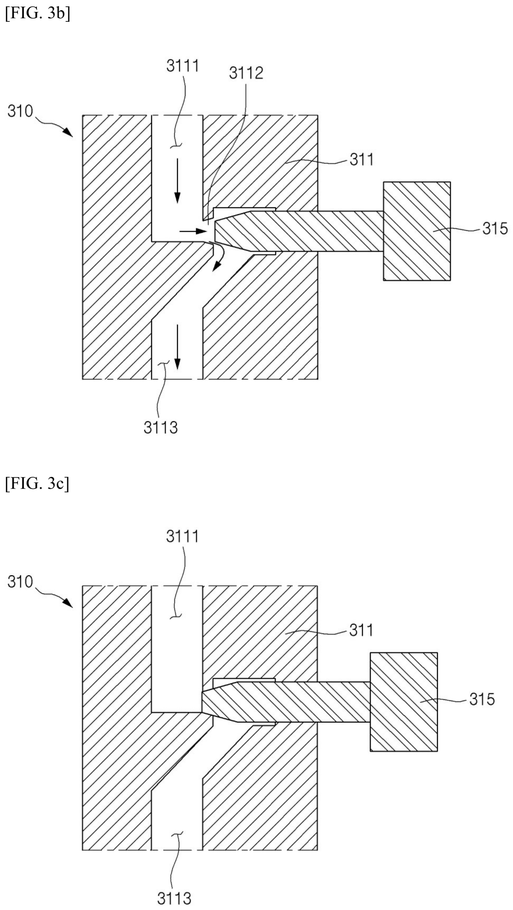

Referring to FIG. 3a, the flow regulating valve 310 may be in a fully open state, where the internal flow path of the valve body 311 is fully open. Referring to FIG. 3b, the flow regulating valve 310 may be in a partially open state, where the internal flow path of the valve body 311 is partially open. The term open state of the flow regulating valve 310 is defined to include both the fully open and partially open states. Referring to FIG. 3c, the flow regulating valve 310 may be in a closed state where the internal flow path is closed to block the flow of the first coating liquid through the internal flow path.

The flow regulating valve 310 can regulate the flow rate of the first coating liquid by adjusting the opening rate of the internal flow path of the valve body 311. The flow regulating valve 310 can be in a fully open, partially open, or closed state by moving the plug 315. In the closed state of the flow regulating valve 310, the plug 315 can close the connecting flow path 3112 between the inlet flow path 3111 and the outlet flow path 3113, thereby blocking the flow of the first coating liquid. In a partially open state of the flow regulating valve 310, the plug 315 can partially open the connecting flow path 3112. In a fully open state of the flow regulating valve 310, the plug 315 can fully open the connecting flow path 3112.

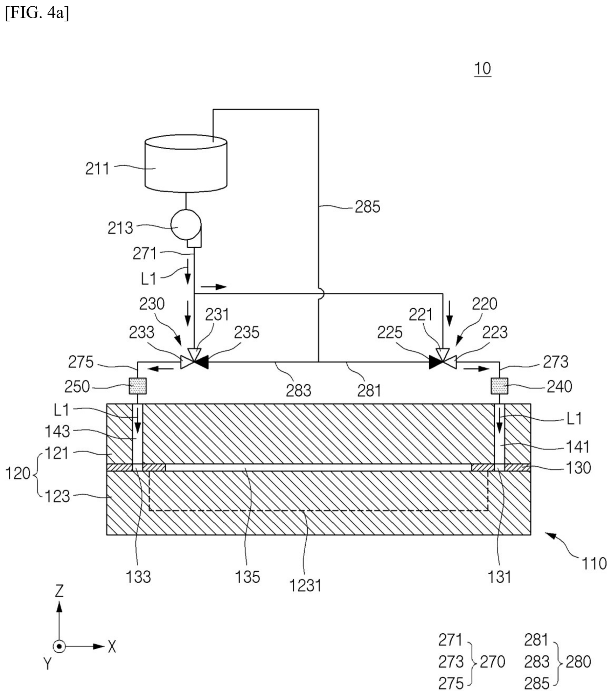

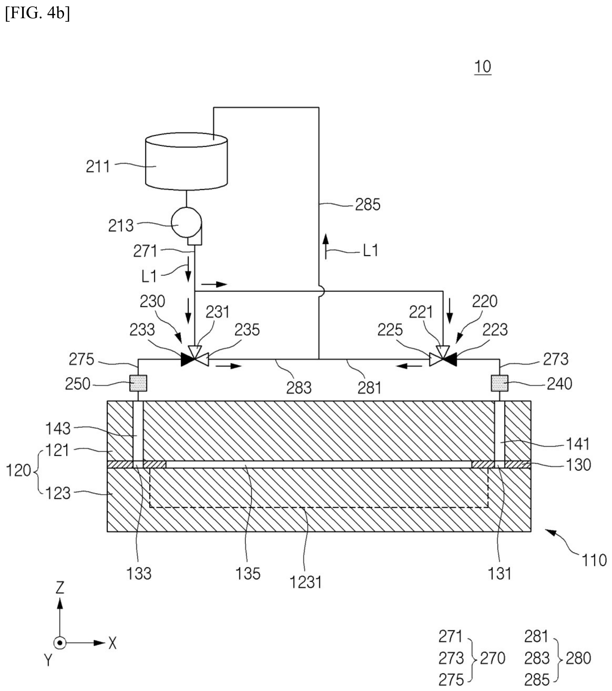

FIGS. 4a and 4b are schematic diagrams illustrating a coating method using the coating device 10, according to exemplary embodiments. In FIGS. 4a and 4b, the flow path of the first coating liquid L1 is indicated by arrows.

Referring to FIG. 4a, the coating device 10 may perform a liquid discharge process in which the first coating liquid L1 is discharged from the coating die 110 to apply the first coating liquid L1 on the substrate. In the liquid discharge process, by operating the pump 213 at a predetermined operating speed, the first coating liquid L1 may be discharged onto the substrate on one side of the coating die 110 via the supply line 270, the first internal flow path 141 and the second internal flow path 143 of the coating die 110, and the first flow path 131 and the second flow path 133 of the coating shim 130.

In the liquid discharge process, the first flow path diverter valve 220 and the second flow path diverter valve 230 discharge the first coating liquid toward the coating die 110, and the first flow regulating valve 240 and the second flow regulating valve 250 can open the internal flow paths, respectively. In the first flow path diverter valve 220, the first input end 221 and the first output end 223 can be opened, and the second output end 225 can be closed. The first flow regulating valve 240 can be in a fully open state or a partially open state. In the second flow path diverter valve 230, the second input end 231 and the third output end 233 can be opened, and the fourth output end 235 can be closed. The second flow regulating valve 250 can be in a fully open state or a partially open state.

Referring to FIG. 4b, the coating device 10 may perform a liquid return process to recover the first coating liquid L1 to the supply tank 211 via the return line 280. In the liquid return process, the first flow path diverter valve 220 and the second flow path diverter valve 230 may each discharge the first coating liquid to the supply tank 211. During the liquid return process, in the first flow path diverter valve 220, the first input end 221 and the second output end 225 may be open, and the first output end 223 may be closed. During the liquid return process, in the second flow path diverter valve 230, the second input end 231 and the fourth output end 235 may be open, and the third output end 233 may be closed.

Generally, if the discharge pressure and/or flow rate of the coating liquid discharged from the coating die 110 is outside the target range, the thickness and/or profile of the coating layer applied on the substrate is outside the normal range, causing process losses. In particular, during a period of time immediately following operation of the pump 213 to initiate the coating process and/or during a period of time immediately following cessation of operation of the pump 213 to stop the coating process, the discharge pressure and/or flow rate of the coating liquid discharged from the coating die 110 may be lower than the target value, causing process loss.

In exemplary embodiments, the coating device 10 may control the first and second flow path diverter valves 220, 230 to return the first coating liquid L1 to the supply tank 211 when the first coating liquid has not reached the desired discharge pressure and/or flow rate, and discharge the first coating liquid L1 through the coating die 110 when the first coating liquid L1 has reached the desired discharge pressure and/or flow rate. The coating device 10 may control the first and second flow path diverter valves 220, 230 so that the first coating liquid L1 with the desired discharge pressure and/or flow rate can be discharged from the coating die 110, thereby reducing process losses and increasing productivity.

In exemplary embodiments, when the pump 213 is operated to initiate the coating process, the first and second flow path diverter valves 220, 230 can be controlled to return the first coating liquid L1 to the supply tank 211 until the discharge pressure of the first coating liquid L1 reaches a target value and to supply the first coating liquid L1 to the coating die 110 after the discharge pressure of the first coating liquid L1 reaches the target value. In this case, the first coating liquid L1 with the desired discharge pressure and/or flow rate is discharged from the coating die 110, which can reduce process losses and increase productivity.

In exemplary embodiments, when the pump 213 is operated to initiate the coating process, the first output end 223 of the first flow path diverter valve 220 and the third output end 233 of the second flow path diverter valve 230 may be opened at a first time point, and the first and second flow regulating valves 240, 250 may switch from a closed state to an open state at a second time point after a period of time has elapsed from the first time point. In this case, the pressure of the first coating liquid L1 reaching the first and second flow regulating valves 240, 250 in the closed state between the first time point and the second time point may increase, and the first coating liquid discharged from the coating die 110 after the second time point when the first and second flow regulating valves 240, 250 switch to the open state may have a discharge pressure and/or flow rate that is within a target range. In this case, the first coating liquid L1 having the desired discharge pressure and/or flow rate is discharged from the coating die 110, which can reduce process losses and increase productivity.

In exemplary embodiments, when the coating process of applying the first coating liquid L1 to the substrate is stopped, the pump 213 may stop operating, and the first and second flow path diverter valves 220, 230 may open their output ends connected to the return line 280 to allow the first coating liquid L1 to be returned to the supply tank 211 via the return line 280. In this case, after stopping the operation of the pump 213, the first coating liquid L1 remaining in the supply line 270 flows to the supply tank 211 rather than to the coating die 110, thereby reducing process losses due to unnecessary discharge of the first coating liquid L1.

### (Second embodiment)

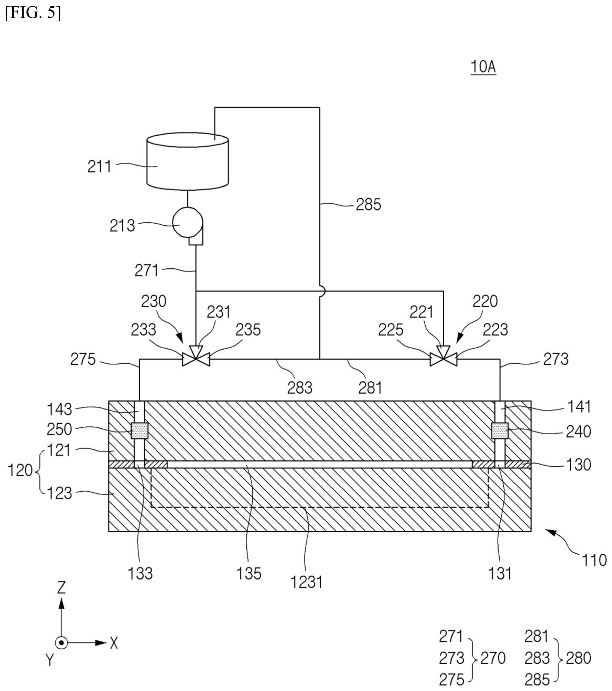

FIG. 5 is a schematic diagram illustrating a coating device 10A according to exemplary embodiments. Hereinafter, the coating device 10A illustrated in FIG. 5 will be described, with emphasis on differences from the coating device 10 described with reference to FIGS. 1 and 2.

Referring to FIG. 5, in the coating device 10A, a first flow regulating valve 240 and a second flow regulating valve 250 may be mounted in the die block 120. The first flow regulating valve 240 is installed in the first internal flow path 141 of the first block 121 and may be configured to regulate the flow rate of the first coating liquid flowing along the first internal flow path 141. The first flow regulating valve 240 may be configured to switch between a fully open state, a partially open state, and a closed state. The second flow regulating valve 250 is installed in the second internal flow path 143 of the first block 121 and may be configured to regulate the flow rate of the first coating liquid flowing along the second internal flow path 143. The second flow regulating valve 250 may be configured to switch between a fully open state, a partially open state, and a closed state.

According to exemplary embodiments, by utilizing the first and second flow regulating valves 240, 250 mounted in the coating die 110 to control the flow rate of the first coating liquid, the time required to form the discharge pressure and/or flow rate of the first coating liquid to a target range can be reduced, ultimately reducing process losses and increasing productivity.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A coating device comprising:
a coating die comprising a first internal flow path;
a supply tank storing a first coating liquid;
a first supply line extending from the supply tank and configured to deliver the first coating liquid;
a first flow path diverter valve connected to the first supply line and comprising a first input end into which the first coating liquid flows, a first output end discharging the first coating liquid, and a second output end discharging the first coating liquid;
a second supply line extending between the first output end of the first flow path diverter valve and the first internal flow path of the coating die;
a return line extending between the second output end of the first flow path diverter valve and the supply tank; and
a first flow regulating valve installed in at least one of the second supply line and the first internal flow path of the coating die, and configured to regulate a flow rate of the first coating liquid.

2. The coating device of claim 1, wherein the coating die further comprises a second internal flow path, and
the coating device further comprises:
a second flow path diverter valve connected to the first supply line and comprising a second input end into which the first coating liquid flows, a third output end discharging the first coating liquid, and a fourth output end discharging the first coating liquid;
a third supply line extending between the third output end of the second flow path diverter valve and the second internal flow path of the coating die; and
a second flow regulating valve installed in at least one of the third supply line and the second internal flow path of the coating die, and configured to regulate a flow rate of the first coating liquid.

3. The coating device of claim 2, wherein
the fourth output end of the second flow path diverter valve is connected to the supply tank via the return line, and
the first coating liquid discharged from the second output end of the first flow path diverter valve and the first coating liquid discharged from the fourth output end of the second flow path diverter valve are merged in the return line and delivered to the supply tank.

4. The coating device of claim 3, wherein
the return line comprises a first segment connected to the second output end of the first flow path diverter valve, a second segment connected to the fourth output end of the second flow path diverter valve, and a third segment connected to the supply tank and connected to each of the first segment and the second segment.

5. The coating device of claim 2, wherein
the coating die comprises:
a die block comprising the first internal flow path, the second internal flow path, and a manifold in which a second coating liquid is accommodated; and
a coating shim disposed within the die block and comprising a first flow path in communication with the first internal flow path, a second flow path in communication with the second internal flow path, and a third flow path in communication with the manifold.

6. The coating device of claim 5, wherein
the first coating liquid comprises an insulating liquid, and
the second coating liquid comprises an electrode slurry.

7. The coating device of claim 5, wherein
the die block comprises:
a first block comprising the first internal flow path and the second internal flow path; and
a second block comprising the manifold, and
the coating shim is interposed between the first block and the second block.

8. The coating device of claim 1, wherein
the first flow regulating valve is mounted in the first internal flow path of the coating die.

9. The coating device of claim 1, further comprising:
a pump installed in the first supply line.

10. The coating device of claim 1, wherein
the first flow path diverter valve comprises a three-way valve.

11. A coating device comprising:
a coating die comprising a first internal flow path and a second internal flow path;
a supply tank storing a first coating liquid;
a first supply line extending from the supply tank and configured to deliver the first coating liquid;
a pump installed in the first supply line;
a first flow path diverter valve connected to the first supply line and comprising a first input end into which the first coating liquid flows, a first output end discharging the first coating liquid, and a second output end discharging the first coating liquid;
a second supply line extending between the first output end of the first flow path diverter valve and the first internal flow path of the coating die;
a second flow path diverter valve connected to the first supply line and comprising a second input end into which the first coating liquid flows, a third output end discharging the first coating liquid, and a fourth output end discharging the first coating liquid;
a third supply line extending between the third output end of the second flow path diverter valve and the second internal flow path of the coating die; and
a return line extending from each of the second output end of the first flow path diverter valve and the fourth output end of the second flow path diverter valve to the supply tank, wherein
the first coating liquid discharged from the second output end of the first flow path diverter valve and the first coating liquid discharged from the fourth output end of the second flow path diverter valve are merged in the return line and delivered to the supply tank.

12. The coating device of claim 11, further comprising:
a first flow regulating valve installed in the second supply line and configured to regulate a flow rate of the first coating liquid; and
a second flow regulating valve installed in the third supply line and configured to regulate a flow rate of the first coating liquid.

13. The coating device of claim 11, further comprising:
a first flow regulating valve installed in the first internal flow path of the coating die and configured to regulate a flow rate of the first coating liquid; and
a second flow regulating valve installed in the second internal flow path of the coating die and configured to regulate a flow rate of the first coating liquid.

14. The coating device of claim 11, wherein
the coating die comprises:
a die block comprising the first internal flow path, the second internal flow path, and a manifold in which a second coating liquid is accommodated; and
a coating shim disposed within the die block and comprising a first flow path in communication with the first internal flow path, a second flow path in communication with the second internal flow path, and a third flow path in communication with the manifold.

15. The coating device of claim 14, wherein
the first coating liquid comprises an insulating liquid, and
the second coating liquid comprises an electrode slurry.
